# EUROPÄISCHE PATENTSCHRIFT

(11) **EP 1 281 657 B1**
(45) Veröffentlichungstag und Bekanntmachung des Hinweises auf die Patenterteilung: **14.07.2004**
(21) Anmeldenummer: 02016442.2
(22) Anmeldetag: 23.07.2002
(51) Int. Cl.: B66C 23/00, B66C 9/00

(54) **Bodengeführtes Hebezeug und Verfahren zur Montage einer technischen Einrichtung**
Lifting device guided on the floor and method for mounting a technical apparatus
Appareil de levage guidé au sol et procédé pour monter un appareil technique

(30) Priorität: 02.08.2001 DE 10138015
(43) Veröffentlichungstag der Anmeldung: 05.02.2003
(73) Patentinhaber: TRIKON Engineering GmbH, 85134 Stammham (DE)
(72) Erfinder: Bauernfeind, Dominik, 85080 Gaimersheim (DE); Schenk, Jürgen, 85107 Baar-Ebenhausen (DE)
(74) Vertreter: Staudt, Hans-Peter, Dipl.-Ing.

(56) Entgegenhaltungen:
- DE-A- 3 538 276
- DE-B- 1 205 841
- FR-A- 1 460 708
- FR-A- 2 754 527
- US-A- 3 500 948

## Beschreibung

Die Erfindung betrifft ein bodengeführtes Hebezeug zum manuellen Bewegen von Bauteilen für die Montage der Bauteile an einer technischen Einrichtung mit einer Balanciereinrichtung, mittels derer das Gewicht der Bauteile kompensierbar ist und die ein im wesentlichen lastfreies manuelles Bewegen der Bauteile in vertikaler Richtung ermöglicht, sowie ein Verfahren zur Montage einer technischen Einrichtung, wobei der Einrichtung einzelne Bauteile zugeführt werden, um mit dieser verbunden zu werden, und wobei die Zuführung der Bauteile mittels eines Hebezeugs mit einer Balanciereinrichtung, mittels derer das Gewicht der Bauteile kompensierbar ist und die ein im wesentlichen lastfreies manuelles Bewegen der Bauteile in vertikaler Richtung ermöglicht, erfolgt.

Eine technische Einrichtung in dem hier relevanten Sinn ist eine Vorrichtung oder eine Anordnung von Bauteilen, die im Montageverfahren zusammengefügt wird. Der Begriff "technische Einrichtung" umfasst somit unter anderem alle Land-, Wasserund Luftfahrzeuge, und insbesondere Automobile.

Bauteile in dem hier gegebenen Zusammenhang sind Gegenstände jeglicher Art, die an technischen Einrichtungen montiert werden bzw. die zur Montage an technischen Einrichtungen der vorstehend genannten Art benötigt werden. Insbesondere umfasst der Begriff "Bauteile" Komponenten oder Bauteilgruppen, die bei der Serienfertigung von Automobilen an einem Montageband dem auf dem Montageband geführten Fahrzeug zur Montage zugeführt werden, beispielsweise ein vormontiertes Cockpit, eine vormontierte Tür, ein sogenanntes Frontend, Sitze, Tankeinheiten, Auspuffanlagen, etc..

Die Erfindung betrifft jedoch nicht nur die Automobilindustrie, sondern auch beispielsweise den allgemeinen Maschinenbau, bei dem greifmittelabhängige Tätigkeiten erforderlich sind, oder beispielsweise den Werkzeugbau oder Formenbau. Die Erfindung betrifft somit insbesondere solche bodengeführten Hebezeuge sowie solche Verfahren zur Montage technischer Einrichtungen, bei denen Bauteile mit hoher Genauigkeit, beispielsweise im Bereich von Zehntelmillimetern, zugeführt werden müssen.

Es ist aus dem Stand der Technik bekannt, bei der Montage von komplexen technischen Einrichtungen, insbesondere bei der Serienfertigung von Automobilen, Hebezeuge zum manuellen Bewegen von Bauteilen zu verwenden. Mittels derartiger Hebezeuge werden Bauteile dem Fahrzeug zugeführt, um mit diesem verbunden zu werden. Beispielsweise werden ein vormontierter Cockpitträger oder ein Fahrzeugsitz einer auf einem Montageband bewegten Karosserie zugeführt, um in diese eingebaut bzw. mit ihr verbunden zu werden.

Hebezeuge der vorstehend genannten Art sind üblicherweise mit einer sogenannten Balanciereinrichtung versehen, mittels derer das Gewicht der Bauteile kompensierbar ist und die ein im wesentlichen lastenfreies manuelles Bewegen der Bauteile in vertikaler Richtung ermöglichen.

Derartiger Handlingsgewerke sind üblicherweise an der Decke einer entsprechenden Montagehalle befestigt. Um den für den jeweiligen Arbeitsschritt nötigen Bewegungsraum bereitzustellen, werden üblicherweise Schienenführungen parallel zur Bandlaufrichtung oder quer dazu an einer Stahlbaukonstruktion an der Hallendecke montiert. An diesen Schienenführungen werden die Balanciereinrichtungen, auch Balancer genannt, mit Hilfe eines Deckenwagens geführt. Die Schienenkonstruktion muss somit die Gewichtskraft der Balanciereinrichtung, des zu bewegenden Bauteils und die durch die Handhabung auftretenden Kräfte und Momente abfangen. Zusätzlich müssen individuelle Sicherheitsmechanismen vorgesehen werden, um Beschädigungen von Gegenständen oder Verletzungen von Personen beim Herabfallen auszuschließen. Ein derartiges Herabfallen kann sowohl infolge von Systemfehlern als auch durch einen plötzlichen Energieverlust im System erfolgen.

Aus dem Vorstehenden ergibt sich, dass bei derartigen abgehängten Gewerken eine sehr genau ausgerichtete Schienenkonstruktion erforderlich ist, die zudem praktisch keine plastische Verformung im Belastungsfall aufweisen darf. Zudem muss ein separates Führungssystem für die Energieversorgung vorgesehen werden. Da bei derartigen Schienensystemen Deckenwägen üblicherweise kardanisch aufgehängt sind, wobei auf eine Grundplatte eines derartigen Deckenwagens üblicherweise ein Drehlager angeflanscht ist, an dem die Balanciereinrichtung montiert werden kann, steht üblicherweise nicht ein Bewegungsumfang von 360° zur Verfügung.

Grundsätzlich besteht die Möglichkeit, bodengeführte Hebezeuge bereitzustellen. Die hierzu erforderliche Verwendung von Rollen führt jedoch zu Handhabungs- und Bedienungskräften, die inakzeptabel sind.

Aus dem Stand der Technik ist die Verwendung von Fluidkissentragvorrichtungen für den Horizontaltransport von schweren Lasten bekannt. Aus der DE-OS 32 04 140 ist beispielsweise eine Luftkissentransporteinheit für schwere flächenartige Lasten bekannt, die zum horizontalen Verschieben von Spanplattenstapeln mit einer Höhe von 2 m vorgesehen ist. Derartige Luftkisseneinrichtungen weisen aufgrund von periodisch auftretenden Leckverlusten ein Schwingungsverhalten auf, das für die hier in Rede stehenden Anwendungsfälle inakzeptabel ist, insbesondere dann, wenn Lasten von weniger als 1.000 kg Gesamtgewicht zu transportieren sind.

Ein anderes bodengeführtes Hebezeug ist z.B. in FR-A-1 460 708 offenbart.

Der Erfindung liegt das technische Problem zugrunde, ein bodengeführtes Hebezeug zum manuellen Bewegen von Bauteilen für die Montage der Bauteile an einer technischen Einrichtung mit einer Balanciereinrichtung bereitzustellen, welches die Nachteile des zuvor erläuterten Standes der Technik nicht aufweist, leicht handhabbar ist und kostengünstig installiert und genutzt werden kann sowie ein entsprechendes Verfahren zur Montage einer technischen Einrichtung.

Die Lösung der durch dieses technische Problem gestellten Aufgabe ist in den Patentansprüchen angegeben.

Die Erfindung stellt ein bodengeführtes Hebezeug zum manuellen Bewegen von Bauteilen für die Montage der Bauteile an einer technischen Einrichtung mit einer Balanciereinrichtung, mittels derer das Gewicht der Bauteile kompensierbar ist und die ein im wesentlichen lastfreies manuelles Bewegen der Bauteile in vertikaler Richtung ermöglicht, bereit, bei der das Hebezeug auf einer Luftkissenanordnung mit mindestens einem Luftkissen und mindestens einem zugeordneten Druckregler horizontal verfahrbar angeordnet ist. Vorzugsweise weist die Luftkissenanordnung mehrere separate Luftkissen auf, wobei für jedes Luftkissen vorzugsweise ein separater Druckregler vorgesehen ist.

Die bodengeführte Auslegung des Hebezeugs gemäß der vorliegenden Erfindung weist den Vorteil auf, dass die umfangreichen technischen Vorrichtungen zur Bereitstellung abgehängter Gewerke, insbesondere eine entsprechende Stahlbau- und Schienenkonstruktion, Deckenwagen mit Bremseinheiten und Seilsicherungen und dergleichen, entfallen. Das erfindungsgemäße bodengeführte Hebezeug sowie das erfindungsgemäße Verfahren zur Montage einer technischen Einrichtung können somit auch bei niedrigen Hallenhöhen eingesetzt werden und sind zudem erheblich kostengünstiger.

Durch die erfindungsgemäße Verwendung einer Luftkissenanordnug werden zudem die Bedienungskräfte gegenüber rollengeführten Konstruktionen erheblich reduziert. Kraftdifferenzen infolge von Verschleiß, wie er beispielsweise bei Rollen möglich ist, treten nicht auf. Zudem ist bei dem erfindungsgemäßen bodengeführten Hebezeug ein Überholvorgang auf einer Bandseite möglich, d.h. es muss kein Werker auf die Beendigung des vorherigen Montageschrittes achten.

Bei der Bereitstellung jeweils eines separaten Druckreglers für jedes einzelne Luftkissen einer Luftkissenanordnung weisen die Steuerleitungen zwischen Druckregler und Luftkissen vorzugsweise gleiche Längen auf. Der Innendurchmesser der Steuerleitungen zwischen einem Druckregler und einem Luftkissen ist vorzugsweise ≥ 8 mm, in einer besonders bevorzugten Ausführungsform der Erfindung ≥ 12 mm. Der Ausgangsdruck der Druckregler, der dem jeweiligen zugeordneten Luftkissen bereitgestellt wird, liegt vorzugsweise zwischen 0,01 MPa und 0,1 MPa, in einer besonders bevorzugten Ausführungsform der Erfindung zwischen 0,02 MPa und 0,03 MPa. Die Ausgangsbohrung des Druckreglers hat vorzugsweise einen Durchmesser von mindestens 3/8 Zoll (0,9525 cm), in einer bevorzugten Ausführungsform mindestens 1/2 Zoll (1,27 cm). Der Druckregler ist vorzugsweise dazu ausgelegt, mit einem Eingangsdruck von 5,5 bar +/- 0,5 bar versorgt zu werden. Die Gesamtmasse des Hebezeugs beträgt einschließlich eines zu hebenden Bauteils mit einer Masse von bis zu 100 kg vorzugsweise ≤ 400 kg.

Die zuvor beschriebenen Auslegungskriterien tragen einzeln oder in beliebiger Anordnung dazu bei, ein zufriedenstellendes Regelverhalten bereitzustellen, welches für ein Zuführen der Bauteile zu den technischen Einrichtungen mit einer Genauigkeit im Bereich von Zehntelmillimetern geeignet ist.

In einer weiteren bevorzugten Ausführungsform der Erfindung weist das Hebezeug im Bereich des Schnittpunktes einer durch den Schwerpunkt des Hebezeugs verlaufenden Achse mit der Bodenfläche einen Stoppermechanismus auf. Wird dieser Stoppermechanismus betätigt, lässt sich das Hebezeug leicht und ohne großen Kraftaufwand um seinen Schwerpunkt verschwenken.

Die Balanciereinrichtung wird vorzugsweise pneumatisch betrieben.

Für den Fall, dass ein Druckluftabfall auftreten sollte, wird das Hebezeug vorzugsweise zusätzlich mit einer Rolleneinrichtung versehen, um eine horizontale Verfahrbarkeit bei Ausfall der Luftkissenanordnung zu gewährleisten.

Das erfindungsgemäße Verfahren zur Montage einer technischen Einrichtung, wobei der Einrichtung einzelne Bauteile zugeführt werden, um mit dieser verbunden zu werden, und wobei die Zuführung der Bauteile mittels eines Hebezeugs mit einer Balanciereinrichtung, mittels derer das Gewicht der Bauteile kompensierbar ist und die ein im wesentlichen lastenfreies manuelles Bewegen der Bauteile in vertikaler Richtung ermöglicht, erfolgt, und wobei zur horizontalen Verschiebung des Hebezeugs mindestens ein Luftkissen verwendet wird, wird vorzugsweise unter Verwendung eines Hebezeugs der vorstehend genannten Art durchgeführt. Besonders vorteilhaft ist die Verwendung des Verfahrens im Zusammenhang mit einer Montagelinie, wobei der zu montierenden Einrichtung einzelne Bauteile an bestimmten Stellen der Montagelinie zugeführt werden, um mit der längs der Montagelinie geführten Einrichtung verbunden zu werden.

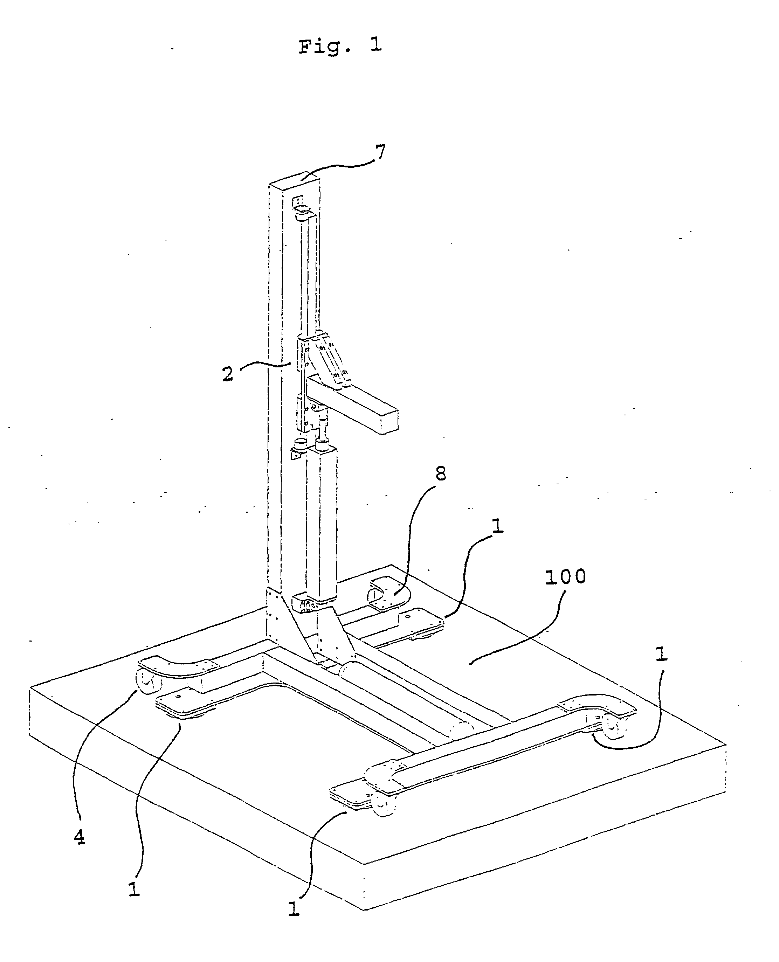

Die Erfindung wird im folgenden anhand eines bevorzugten Ausführungsbeispiels in Verbindung mit der Zeichnung beispielhaft weiter erläutert, wobei
Fig. 1 die schematische Darstellung einer Ausführungsform des erfindungsgemäßen Hebezeugs ist.

Fig. 1 zeigt einen Ausschnitt eines Bodensegments 100, auf dem ein Ausführungsbeispiel des erfindungsgemäßen bodengeführten Hebezeugs zum manuellen Bewegen von Bauteilen für die Montage der Bauteile an einer technischen Einrichtung steht. Das Hebezeug verfügt über eine Balanciereinrichtung 2, mittels derer das Gewicht der Bauteile kompensierbar ist und die ein im wesentlichen lastfreies manuelles Bewegen der Bauteile in vertikaler Richtung ermöglicht. Die Balanciereinrichtung 2 ist mit einer Hubsäule 7 verbunden, die auf einem Bodengestell 8 angeordnet ist. Auf der Unterseite des Bodengestells 8 sind vier Luftkissen 1 angeordnet, die über vier separate Druckregler (nicht gezeigt) mit Druckluft beaufschlagt werden. Zusätzlich sind, jeweils im Bereich der vier Luftkissen 1, vier Rollen 4 angeordnet, die im normalen Betriebszustand nicht mit dem Boden 100 in Eingriff sind. Lediglich für den Fall, dass die Druckluft unter ein vorbestimmtes Niveau abfallen sollte bzw. bei einem Defekt oder Ausfall der Luftkissenanordnung gelangen die Rollen 4 mit dem Boden 100 in Berührung, um eine Verfahrbarkeit des Hebezeugs zu gewährleisten.

Die bei der Verwendung des Hebezeugs auftretenden Kräfte und Momente werden von dem Bodengestell 8 über die Luftkissenanordnung mit den Luftkissen 1 auf den Boden 100 übertragen. Da für jedes Luftkissen 1 ein separater Druckregler (nicht gezeigt) vorgesehen ist, können unterschiedlich hohe Kräfte an den jeweiligen Luftkissen 1 kompensiert werden.

Es versteht sich, dass zur Steuerung der Balanciereinrichtung sowie zur Druckreglung eine elektronische Steuereinrichtung verwendet werden kann. Es versteht sich zudem, dass unterschiedlichste Arten von Balanciereinrichtungen und Hebevorrichtungen verwendet werden können, beispielsweise eine feststehende Hubsäule oder ein Hebegetriebe mit Parallelogrammarm. Die Hubbewegung kann sowohl pneumatisch als auch über andere Energiemedien erbracht werden.

Das dargestellte Ausführungsbeispiel eines Hebezeugs ist für Bauteile bis zu einer Gesamtmasse von ca. 100 kg geeignet, wobei in diesem Fall die Gesamtmasse des Hebezeugs und des Bauteils ca. 400 kg beträgt. Die Handhabung deutlich höherer Lasten ist ebenfalls möglich. Die verwendeten Druckregler weisen einen Druckregelbereich von 0,01 bis 0,8 MPa auf und haben ein lineares Regelverhalten von +/- 1 % vom Endwert. Bei der beschriebenen Ausführungsform beträgt der Druckbereich 0,02 bis 0,03 MPa.

Bei den verwendeten Luftkissen handelt es sich um Luftkissen der Firma LKS AG, Althofstr. 1, CH-5432 Neuenhof, Schweiz, mit der Typbezeichnung 003LE2-15. Diese Luftkissen sind für eine Last von 300 kg ausgelegt, so dass sich bei der Verwendung von vier Luftkissen eine Gesamtnennlast von 1.200 kg ergibt. Bei dem tatsächlichen Gewicht der vorliegenden Ausführungsform des Hebezeugs wird daher nicht der übliche Druck von 5 bar eingesetzt, sondern ein Druckbereich von 0,2 bar. Die hierbei auftretenden Druckschwankungen, die eine konstante Regelung unmöglich machen und ein Flattern der Kissen zur Folge haben, welches durch eine reglerinduzierte Pumpwirkung zusätzlich überlagert wird, kann durch Abstimmung der Längen der Steuerleitungen zwischen Druckregler und Luftkissen, der Durchmesser der Steuerleitungen und des Durchmessers der Ausgangsbohrung der Druckregler eliminiert werden.

Bei der bevorzugten Ausführungsform der Erfindung weisen die Steuerleitungen (nicht gezeigt) zwischen Druckregler (nicht gezeigt) und Luftkissen 1 in etwa gleiche Längen auf. Der Durchmesser der Steuerleitungen beträgt 12 mm. Hierdurch wird das notwendige Luftvolumen für eine konstante Regelung bereitgestellt. Die Abstimmung der Längen der Steuerleitungen zu den Luftkissen hat zur Folge, dass die Zeitdauer der Schwingungen auf ein gleiches Maß gebracht wird.

Wie bereits erläutert, werden die Druckregler in einem Druckbereich von 0,02 bis 0,03 MPa betrieben. Der Anschluss für die Ausgangsleitungen, d.h. die Ausgangsbohrung der Druckregler weist einen Durchmesser von 1/2 Zoll (1,27 cm) auf.

Das beschriebene Hebezeug ermöglicht eine Positionierung eines Bauteils an einer technischen Vorrichtung mit einer Genauigkeit von +/- 0,2 mm. Es eignet sich insbesondere für die Montage von Bauteilen oder vormontierten Bauteilgruppen an einem Fahrzeug, das auf einem Montageband zusammengesetzt wird. Derartige Bauteile oder Module können beispielsweise ein vormontiertes Cockpit, Türen, Auspuffanlagen, ein komplettes Frontend, eine Motorhaube oder ein Kofferraumdeckel, Räder, Sitze, Tankanlage, ein Werkzeugträger, eine Batterieanlage oder andere Montagegruppen sein.

Bei einem erfindungsgemäßen Montageverfahren unter Verwendung des beschriebenen Hebezeugs wird bei Bereitstellung eines Montagebandes vorzugsweise sichergestellt, dass die technische Einrichtung, d.h. beispielsweise die Fahrzeugkarosserie, unterfahrbar ist. Sollte dies nicht möglich sein, können an dem Hebezeug entsprechende Gegengewichte vorgesehen werden, um ein Kippen zu verhindern.

Es versteht sich für den Fachmann, dass das erfindungsgemäße Hebezeug sowie das erfindungsgemäße Montageverfahren bei einer Vielzahl von Einsatzzwecken anwendbar ist, die weder auf die Automobilindustrie noch auf die Fahrzeugindustrie beschränkt ist. Die Erfindung gewährleistet eine hochgenaue Positionierung von Gegenständen bei minimalen Handhabungskräften und gegenüber dem Stand der Technik erheblich günstigeren Investitionskosten. Sie kann zudem zusammen mit herkömmlichen Montagesystemen und -einrichtungen verwendet werden, beispielsweise als Ersatzlösung bei Ausfall anderer Systeme oder als flexible Ergänzung hierzu.

## Patentansprüche

1. Bodengeführtes Hebezeug zum manuellen Bewegen von Bauteilen für die Montage der Bauteile an einer technischen Einrichtung mit einer Balanciereinrichtung (2), mittels derer das Gewicht der Bauteile kompensierbar ist und die ein im Wesentlichen lastfreies manuelles Bewegen der Bauteile in vertikaler Richtung ermöglicht,
wobei das Hebezeug auf einer Luftkissenanordnung (1) mit mindestens einem Luftkissen (1) und mindestens einem zugeordneten Druckregler horizontal verfahrbar angeordnet ist.

2. Hebezeug nach Anspruch 1, **dadurch gekennzeichnet, dass** die Luftkissenanordnung (1) mehrere separate Luftkissen (1) aufweist.

3. Hebezeug nach Anspruch 2, **dadurch gekennzeichnet, dass** für jedes Luftkissen (1) ein separater Druckregler vorgesehen ist.

4. Hebezeug nach Anspruch 3, **dadurch gekennzeichnet, dass** die Steuerleitungen zwischen Druckregler und Luftkissen (1) gleiche Längen auf weisen.

5. Hebezeug nach einem der vorstehenden Ansprüche, **dadurch gekennzeichnet, dass** die Steuerleitungen zwischen Druckregler und Luftkissen (1) einen Innendurchmesser von ≥ 8 mm, vorzugsweise ≥ 12 mm aufweisen.

6. Hebezeug nach einem der vorstehenden Ansprüche, **dadurch gekennzeichnet, dass** der Druckregler einen Ausgangsdruck im Bereich zwischen 0,01 MPa und 0,1 MPa, vorzugsweise zwischen 0,02 MPa und 0,03 MPa an dem zugeordneten Luftkissen (1) bereitstellt.

7. Hebezeug nach einem der vorstehenden Ansprüche, **dadurch gekennzeichnet, dass** der Druckregler eine Ausgangsbohrung mit einem Durchmesser von mindestens 3/8 Zoll (0,9525 cm), vorzugsweise mindestens ½ Zoll (1,27 cm) aufweist.

8. Hebezeug nach einem der vorstehenden Ansprüche, **dadurch gekennzeichnet, dass** ein Stoppermechanismus im Bereich des Schnittpunktes einer durch den Schwerpunkt des Hebezeugs verlaufenden Achse mit dem Boden vorgesehen ist.

9. Hebezeug nach einem der vorstehenden Ansprüche, **dadurch gekennzeichnet, dass** die Balanciereinrichtung (2) pneumatisch betrieben ist.

10. Hebezeug nach einem der vorstehenden Ansprüche, **dadurch gekennzeichnet, dass** die Gesamtmasse des Hebezeugs ≤ 400 kg einschließlich eines zu hebenden Bauteils mit einer Masse bis zu 100 kg beträgt.

11. Hebezeug nach einem der vorstehenden Ansprüche, **dadurch gekennzeichnet, dass** der Druckregler dazu ausgelegt ist, mit einem Eingangsdruck von 5,5 bar ±0,5 bar versorgt zu werden.

12. Hebezeug nach einem der vorstehenden Ansprüche, **dadurch gekennzeichnet, dass** das Hebezeug zusätzlich mit einer Rolleneinrichtung (4) versehen ist, um eine horizontale Verfahrbarkeit bei Ausfall der Luftkissenanordnung (1) zu gewährleisten.

13. Hebezeug nach einem der vorstehenden Ansprüche, **dadurch gekennzeichnet, dass** die technische Einrichtung ein Land-, Wasser- oder Luftfahrzeug ist.

14. Hebezeug nach Anspruch 13, **dadurch gekennzeichnet, dass** das Fahrzeug ein Automobil ist.

15. Verfahren zur Montage einer technischen Einrichtung, wobei der Einrichtung einzelne Bauteile zugeführt werden, um mit dieser verbunden zu werden, und wobei die Zuführung der Bauteile mittels eines Hebezeugs mit einer Balanciereinrichtung (2), mittels derer das Gewicht der Bauteile kompensierbar ist und die ein im Wesentlichen lastfreies manuelles Bewegen der Bauteile in vertikaler Richtung ermöglicht, erfolgt,
wobei zur horizontalen Verschiebung des Hebezeugs mindestens ein Luftkissen (1) verwendet wird.

16. Verfahren nach Anspruch 15, **dadurch gekennzeichnet, dass** zur Montage der Einrichtung eine Montagelinie verwendet wird, wobei der Einrichtung einzelne Bauteile an bestimmten Stellen der Montagelinie zugeführt werden, um mit der längs der Montagelinie geführten Einrichtung verbunden zu werden.

17. Verfahren nach Anspruch 15 oder 16, **dadurch gekennzeichnet, dass** ein Hebezeug nach einem der Ansprüche 1 bis 14 verwendet wird.

## Claims

1. Lifting device guided on the floor for moving components manually for the purpose of mounting said components on a technical apparatus, said lifting device comprising a balance device (2) by means of which the weight of said components can be compensated and which enables that said components can be moved manually in an essentially load-free way in vertical direction,
wherein said lifting device is arranged horizontally movable on an air cushion arrangement (1) with at least one air cushion (1) and with at least one pressure controller associated therewith.

2. Lifting device according to claim 1, **characterized in that** said air cushion arrangement (1) has several separate air cushions (1).

3. Lifting device according to claim 2, **characterized in that** for each air cushion (1) a separate pressure controller is provided.

4. Lifting device according to claim 3, **characterized in that** the control conduits between pressure controller and air cushion (1) have the same length.

5. Lifting device according to any of the preceding claims, **characterized in that** said control conduits between pressure controller and air cushion (1) have an inside diameter of ≥ 8 mm, preferably ≥ 12 mm.

6. Lifting device according to any of the preceding claims, **characterized in that** said pressure controller provides an output pressure in the range between 0.01 MPa and 0.1 MPa, preferably between 0.02 MPa and 0.03 MPa at said associated air cushion (1).

7. Lifting device according to any of the preceding claims, **characterized in that** said pressure controller has an output bore having a diameter of at least 3/8 Inch (0.9525 cm), preferably at least 1/2 Inch (1.27 cm).

8. Lifting device according to any of the preceding claims, **characterized in that** a stopper mechanism is provided in the region of the intersection point between an axis extending through the center of gravity of said lifting device and the floor.

9. Lifting device according to any of the preceding claims, **characterized in that** said balance device (2) is operated pneumatically.

10. Lifting device according to any of the preceding claims, **characterized in that** the overall mass of said lifting device is ≤ 400 kg including a component to be lifted having a mass of up to 100 kg.

11. Lifting device according to any of the preceding claims, **characterized in that** said pressure controller is designed to be supplied with an input pressure of 5.5 bar ± 0.5 bar.

12. Lifting device according to any of the preceding claims, **characterized in that** said lifting device is additionally provided with a wheel device (4) to ensure horizontal movability on failure of said air cushion arrangement (1).

13. Lifting device according to any of the preceding claims, **characterized in that** said technical apparatus is a vehicle for locomotion by land, air or water.

14. Lifting device according to claim 13, **characterized in that** said vehicle is an automobile.

15. Method for mounting a technical apparatus, wherein single components are conveyed to said apparatus to be connected therewith, and wherein the conveying of said components is carried out by means of a lifting device with a balance device (2) by means of which the weight of said components can be compensated and which enables that said components can be moved manually in an essentially load-free way in vertical direction,
wherein at least one air cushion (1) is used for moving said lifting device horizontally.

16. Method according to claim 15, **characterized in that** for mounting said apparatus an assembly line is used,
wherein single components are conveyed to said apparatus at specific points of said assembly line to be connected with said apparatus being conveyed along said assembly line.

17. Method according to claim 15 or 16, **characterized in that** a lifting device according to any of claims 1 to 14 is used.

## Revendications

1. Appareil de levage guidé au sol pour le mouvement manuel de composants pour le montage des composants sur un dispositif technique avec un dispositif à balancier (2), au moyen duquel le poids des composants est compensable et qui permet un mouvement manuel des composants en direction verticale substantiellement sans charge,
l'appareil de levage étant disposé de façon horizontalement déplaçable sur un arrangement de coussins pneumatiques (1) comprenant au moins un coussin pneumatique (1) et au moins un régulateur de pression associé.

2. Appareil de levage selon la revendication 1, **caractérisé en ce que** l'arrangement de coussins pneumatiques (1) présente plusieurs coussins pneumatiques (1) séparés.

3. Appareil de levage, selon la revendication 2, **caractérisé en ce que** pour chaque coussin pneumatique (1) est prévu un régulateur de pression séparé.

4. Appareil de levage, selon la revendication 3, **caractérisé en ce que** les lignes de commande entre le régulateur de pression et le coussin pneumatique (1) présentent la même longueur.

5. Appareil de levage, selon une des revendications précédentes, **caractérisé en ce que** les lignes de commande entre le régulateur de pression et le coussin pneumatique (1) présentent un diamètre intérieur de ≥ 8 mm, de préférence ≥ 12 mm.

6. Appareil de levage, selon une des revendications précédentes, **caractérisé en ce que** le régulateur de pression fournit une pression de sortie dans la marge entre 0,01 MPa et 0,1 MPa, de préférence entre 0,02 MPa et 0,03 MPa au coussin pneumatique (1) associé.

7. Appareil de levage, selon une des revendications précédentes, **caractérisé en ce que** le régulateur de pression présente un alésage de sortie avec un diamètre d'au moins 3/8 pouces (0,9525 cm), de préférence d'au moins ½ pouce (1,27 cm).

8. Appareil de levage, selon une des revendications précédentes, **caractérisé en ce qu'**un mécanisme d'arrêt est prévu dans la zone du point d'intersection d'un axe passant par le barycentre de l'appareil de levage avec le fond.

9. Appareil de levage, selon une des revendications précédentes, **caractérisé en ce que** le dispositif à balancier (2) est actionné de façon pneumatique.

10. Appareil de levage, selon une des revendications précédentes, **caractérisé en ce que** la masse totale de l'appareil de levage est de ≤ 400 kg, ci-inclus un composant à soulever avec une masse jusqu'à 100 kg.

11. Appareil de levage, selon une des revendications précédentes, **caractérisé en ce que** le régulateur de pression est agencé de façon à être alimenté avec une pression d'entrée de 5,5 bar ± 0,5 bar.

12. Appareil de levage, selon une des revendications précédentes, **caractérisé en ce que** l'appareil de levage est en plus pourvu d'un dispositif à rouleau (4) pour garantir un déplacement horizontal en cas de panne de l'arrangement de coussins pneumatiques (1).

13. Appareil de levage, selon une des revendications précédentes, **caractérisé en ce que** le dispositif technique est un véhicule terrestre, un bateau ou un aéronef.

14. Appareil de levage, selon la revendication 13, **caractérisé en ce que** le véhicule est une automobile.

15. Procédé pour le montage d'un dispositif technique, des composants individuels étant amenés au dispositif pour être reliés à celui-ci et l'amenage des composants se faisant à l'aide d'un appareil de levage avec un dispositif à balancier (2), par lequel le poids des composants est compensable et qui permet un mouvement manuel des composants en direction verticale substantiellement sans charge,
au moins un coussin pneumatique (1) étant utilisé pour le déplacement horizontal de l'appareil de levage.

16. Procédé selon la revendication 15, **caractérisé en ce qu'**on utilise pour le montage du dispositif une ligne de montage, des composants individuels étant amenés au dispositif à des points définis de la ligne de montage pour être reliés avec le dispositif guidé le long de la ligne de montage.

17. Procédé selon la revendication 15 ou 16, **caractérisé en ce qu'**on utilise un appareil de levage selon une des revendications 1 à 14.
